(19) Europäisches Patentamt
European Patent Office
Office européen des brevets

(11) Veröffentlichungsnummer: **0 340 748 A2**

(12) # EUROPÄISCHE PATENTANMELDUNG

(21) Anmeldenummer: **89108011.1**

(22) Anmeldetag: **03.05.89**

(51) Int. Cl.[4]: **C08K 3/22 , C08K 3/26 , C08K 3/30 , C08L 23/02**

(30) Priorität: **04.05.88 CS 3007/88**

(43) Veröffentlichungstag der Anmeldung: **08.11.89 Patentblatt 89/45**

(84) Benannte Vertragsstaaten: **DE FR GB IT**

(71) Anmelder: **CHEMOPETROL concernová ucelová organizace
Vyzkumny ustav makromolekularni chemie
Tkalcovska 2
Brno(CS)**

(72) Erfinder: **Retruj, Jaroslav, RNDr.
CSc, Bieblova 22
Brno(CS)**
Erfinder: **Svérak, Tomás, Dipl.-Ing.
CSc, Bri Kotlánu 4
Brno(CS)**
Erfinder: **Vesely, Karel, Prof.RNDr.
DrSc, Lerchova 42
Brno(CS)**
Erfinder: **Kummer, Miroslav, RNDr
Podlesi 33
Brno(CS)**
Erfinder: **Poloucek, Eduard
Vecerova 42
Brno(CS)**
Erfinder: **Pospisil, Ladislav, RNDr
Nám.Sov.Hrdinu 6
Brno(CS)**
Erfinder: **Jancar, Josef, RNDr.
CSc, Jirovcova 11
Brno(CS)**
Erfinder: **Rychly, Josef, Dipl.-Ing.
CSc, Astrova 50
Bratislava(CS)**

(74) Vertreter: **Patentanwälte Beetz sen. - Beetz jun. Timpe - Siegfried - Schmitt-Fumian
Steinsdorfstrasse 10
D-8000 München 22(DE)**

(54) **Kompositmaterialien auf der Basis von Polyolefinen.**

(57) Die Flammfestigkeit von Polyolefinen, die als Füllstoff, bezogen auf das Komposit, 25 bis 75 Gew.-% Kalzium- und/oder Magnesiumfüllstoff (Karbonate, Hydroxide, Oxide) enthalten, erhöht sich in Anwesenheit von 5 bis 45 Gew.-% Ammoniumsulfat, bezogen auf das Komposit, das 15 bis 50 Gew.-% Polyolefine enthält, wobei die Mischfüllstoffe eine Teilchengröße von 1 bis 20 µm aufweisen.

EP 0 340 748 A2

## Kompositmaterialien auf der Basis von Polyolefinen

Die Erfindung betrifft Kompositmaterialien auf der Basis von Polyolefinen, die Mischfüllstoffe enthalten, welche als nichttoxische Flammschutzzusätze wirken.

Es ist bekannt, daß Polyolefine leicht brennbare Materialien sind. Dieser Umstand beeinträchtigt erheblich ihre Anwendung in einer Reihe von Gebieten, wie z.B. in der Bauindustrie, im Transport und in der Elektrotechnik.

Der Begriff "Brennbarkeit" muß sowohl vom Gesichtspunkt der Größe der Brandquelle (Funke, Zündholz, kleines Feuer, großes Feuer) als auch vom Gesichtspunkt der Einwirkungsdauer des Feuers auf das untersuchte Material beurteilt werden. In letzter Zeit wird auf die sekundären Charakteristika der Brennbarkeit ein immer größeres Gewicht gelegt, zu welchen vor allem die Korrosivität und Giftigkeit der Verbrennungsprodukte und die Rauchdichte gehören.

Diese Anforderungen folgen aus statistischen Daten, denen zufolge es bei der überwiegenden Mehrzahl der Menschenopfer bei Bränden zu Vergiftungen durch Verbrennungsprodukte gekommen ist. Das ist der Grund, warum von den bisher verwendeten Retardeuren abgegangen wird, die Halcgene enthalten. So wird z.B. die Anwendung von bromierten Diphenyletherb verboten, weil sich bei einer Temperatur von ungefähr 600° C hochtoxische Tri- bis Octobrom-Benzofurane bilden.

Deshalb beginnen sich rasch Füllstoffe durchzusetzen, die unter Hitzeeinfluß Wasser abspalten. Zu den Beispielen hierfür gehören Aluminiumhydroxid, das sich bei ca. 190° C zersetzt (es ist nur verwendbar für Polymere, die unter dieser Temperatur verarbeitet werden), und Magnesiumhydroxid, das erst von 340° C an Wasser abspaltet.

Daraus folgt, daß Aluminiumhydroxid für Polypropylen nicht anwendbar ist.

Magnesiumhydroxid mit einer erforderlichen Teilchengröße (1-5 µm) und einer erforderlichen Oberflächenbehandlung ist ein teurer Füllstoff (man schätzt, daß sein Preis nicht unter 1,5 US-Dollar/kg sinken wird), was seine Anwendung nur auf spezielle Fälle einschränkt, z.B. die Elektroindustrie.

Für Massenanwendungen in der Bauindustrie wäre es wünschenswert, einen Füllstoff zu finden, der die Anforderung einer Verarbeitbarkeit ohne Zersetzung bis zu einer Temperatur von mindestens 250° C erfüllen würde und dessen Herstellung billiger wäre. Um einen wirksamen Flammschutz von Polyolefinen zu erzielen, muß es zur Abspaltung von Wasser im Temperaturintervall von 260 bis 400° C kommen, was bereits eine Temperatur ist, bei der es zu einer Selbstentzündung von Polyolefinen kommt.

Das billige und leicht zugängliche Kalziumhydroxid ist als Flammschutzmittel beinahe unwirksam, weil es erst bei einer zu hohen Temperatur (von 520° C) zu seiner Dehydratation kommt, und ebenso wenig wirksam sind die Oxide und Karbonate von Kalzium und Magnesium, die zu den billigsten Füllstoffen gehören.

Jetzt wurde ein billiger Zusatz gefunden, der die Flammfestigkeit von Kompositmaterialien, die mit diesen Füllstoffen gefüllt wurden, erhöht.

Der Erfindung liegt die Aufgabe zugrunde, Kompositmaterialien auf der Basis von Polyolefin mit Mischfüllstoffen, die als nichttoxische Flammschutzzusätze wirken, zu entwickeln, die möglichst wirtschaftlich herstellbar sind und keine Korrosionswirkungen auf die Verarbeitgungsmaschinen hervorrufen.

Gegenstand der Erfindung, womit diese Aufgabe gelöst wird, sind Kompositmaterialien auf der Basis von Polyolefinen, die mit Hydroxiden und/oder Oxiden und/oder Karbonaten von Kalzium oder Magnesium gefüllt sind sowie gegebenenfalls Pigmente, Stabilisatoren, Verarbeitungshilfsmittel und/oder weitere Polymere enthalten, dadurch gekennzeichnet, daß sie 15 bis 20 Gew.-% Polyolefine, 25 bis 75 Gew.-% der Kalzium- und/oder Magnesiumverbindungsfüllstoffe und 5 bis 45 Gew.-% Ammoniumsulfat enthalten, wobei die Mischfüllstoffe eine Teilchengröße von 1 bis 20 µm aufweisen.

Die Verwendung von Ammoniumsulfat allein als Flammschutzmittel ist schon lange bekannt, z.B. für Cellulose (beschrieben z.B. im Buch von Cullis C.F., Hirschler M.M.: "The Combustion of Organic Polymers", Kap. 4.4.10). In diesem Fall kann die Wirkung dieses Zusatzes so erklärt werden, daß durch Zersetzung des Ammoniumsulfats in der Hitze Schwefelsäure freigesetzt wird, die eine Dehydratation der Cellulose unter Bildung von koksartigen Produkten bewirk.

Die Patentschriften JP 60-006.740 und JP 59-232.129 der Firma Chisso beschreiben die Verwendung von Ammoniumsulfat als Flammschutzzusatz für Polyolefine derart, daß man das Ammoniumsulfat mit einer Oberflächenschicht von Polysiloxan versieht, die durch Imprägnierung aus einer Lösung und Trocknung gebildet wird. Außer daß dieses Verfahren bedeutende Kosten verursacht, muß darauf hingewiesen werden, daß eine Imprägnierung mit Polysiloxan eine teilweise Zersetzung des Ammoniumsulfats zu saurem Sulfat nicht verhindern kann und die Verarbeitungsmaschinen nicht vor Korrosion schützt. Beim Kneten von Polyolefinen mit Ammoniumsulfat kommt es immer zu einer teilweisen Zersetzung unter Abspaltung von

Ammoniak und Bildung von stark korrosivem saurem Ammoniumsulfat. Aus diesem Grund haben sich diese Erfindungen auch überhaupt nicht in der Praxis durchgesetzt.

Ammoniumsulfat ist bis zu einer Temperatur von 320° C stabil; über dieser Temperatur kommt es zu seiner partiellen Zersetzung:

$(NH_4)_2SO_4 \rightarrow NH_4HSO_4 + NH_3$ (1)

Das entstandene Ammoniumhydrogensulfat reagiert mit Karbonaten, z.B.

$CaCO_3 + NH_4HSO_4 \rightarrow CaSO_4 + NH_3 + CO_2 + H_2O$ (2)

Vollkommen analog kann Ammoniumsulfat zur Zersetzung von Hydroxiden benutzt werden, z.B.

$Ca(OH)_2 + NH_4HSO_4 \rightarrow CaSO_4 + NH_3 + 2\,H_2O$ (3).

Außer für reines Karbonat oder Hydroxid von Kalzium können die beschriebenen Reaktionen auch für viele andere Füllstoffe verwendet werden, die Karbonate und/oder Hydroxide und Oxide, wie Dolomite, und Hydrate enthalten, die durch teilweise oder vollkommene Hydratation von gebrannten Karbonaten nach der CS-A-249 337 entstehen.

Bedingung für die Wirksamkeit der genannten Mischfüllstoffe ist eine geeignete Teilchengröße (im Bereich von 1 bis 20 µm) und eine geeignete Oberflächenbehandlung, damit die einzelnen Teilchen gut dispergiert sind.

Geeignete Gemische gemäß der Erfindung sind folgende Systeme:

| | | |
|---|---|---|
| **$CaCO_3 + (NH_4)_2SO_4$** | im Molverhältnis 1 : 1 | bis 2 : 1, |
| **$MgCO_3.CaCO_3 + (NH_4)_2SO_4$** | " 1 : 1 | bis 2 : 1, |
| **$Ca(OH)_2 + (NH_4)_2SO_4$** | " 1 : 1 | bis 2 : 1 oder |
| **$Mg(OH)_2.CaCO_3 + (NH_4)_2SO_4$** | " 1 : 1 | bis 2 : 1. |

Der Zusatz von Ammoniumsulfat erhöht nicht nur die Entstehung von Wasser und Kohlendioxid bei der Einwirkung von Hitze auf das Kompositmaterial, sondern erhöht auch die Wirksamkeit des Systems als Flammschutzmittel und trägt zum endothermen Verlauf der Reaktionen bei.

Als Polymerbasisstoffe können Polyolefine in Form von Homopolymeren (Polypropylen, Polyethylen), Copolymeren oder auch Gemischen mit anderen Polymeren verwendet werden. Die Materialien können auch weitere Minoritätsfüllstoffe und Verstärker, Gleitmittel, Pigmente und Stabilisatorzusätze enthalten.

Das Prinzip der Erfindung wird durch folgende Beispiele näher erläutert. Alle Proben wurden mit einem Brabender-Kneter bei 190° C nach dem üblichen Verfahren bei einer Verweilzeit von 10 Minuten bei 50 U/min zubereitet. Die Prüfkörper zur Bewertung der Sauerstoffzahl (SZ) nach ASTM-D-2863-70 wurden durch Pressen hergestellt. Die Teilchengröße aller durch Mahlen in Kugelmühlen hergestellter Füllstoffe entsprach einem Feinheitsgrad von d 97 = 15 µm. Alle angeführten Teile sind Gewichtsteile. PP bedeutet in den Beispielen die Anwendung von Polypropylen, PE Polyethylen, T Gewichtsteile.

Beispiele 1-2

| Polymer: PP "55212 Mosten Chemopetrol"<br>$CaCO_3$ "PU 20 Keramische Werke, Poběžovice" | Sauerstoffzahl | Festigkeit MPa | Kerbschlagzähigkeit Charpy $kJm^{-2}$ |
|---|---|---|---|
| 40 T. PP + 30 T. $CaCO_3$ + 30 T. $(NH_4)_2SO_4$ | 31,0 | 16,5 | 4,8 |
| 40 T. PP + 60 T. $CaCO_3$ (Vergleichsversuch) | 21,5 | 14,0 | 4,1 |

Beispiele 3-4

| Polymer: PE "FB 29 Liten Chemopetrol"<br>$CaCO_3$ "PU 20 Keramische Werke, Poběžovice" | Sauerstoffzahl | Festigkeit MPa | Kerbschlagzähigkeit Charpy $kJm^2$ |
|---|---|---|---|
| 30 T. PE + 40 T. $CaCO_3$ + 30 T. $(NH_4)_2SO_4$<br>30 T. PE + 40 T. $CaCO_3$ (Vergleichsversuch) | 35,5<br>23,5 | 16,0<br>9,5 | 11<br>4,5 |

Beispiele 5-6

| Polymer: "EPDM Hüls" $CaCO_3$ "PU 20 Keramische Werke, Poběžovice | | | |
|---|---|---|---|
| 30 T. Kautschuk "EP" + 40 T. $CaCO_3$ + 30 T. $(NH_4)_2SO_4$<br>30 T. Kautschuk "EP" + 70 T. $CaCO_3$ (Vergleichsversuch) | 33,5<br>22,0 | --<br>-- | --<br>-- |

Beispiele 7-8

| Polymer: PP "55 212 Mosten Chemopetrol"<br>$Ca(OH)_2$ "Kalkwerke Mikulov" | | | |
|---|---|---|---|
| 40 T.PP + 25 T. $Ca(OH)_2$ + 35 T. $(NH_4)_2SO_4$<br>40 T.PP + 60 T. $Ca(OH)_2$(Vergleichsversuch) | 35,5<br>22,0 | 17,5<br>16,8 | 5,1<br>4,0 |

Beispiele 9-10

| Polymer: PE "Liten FB 29 Chemopetrol"<br>$CaCO_3$ "Keramische Werke, Poběžovice"<br>$Mg(OH)_2$ "Kisuma 5A Kyowa Chemical Ind. Co." | | | |
|---|---|---|---|
| 30 T. PE + 40 T.$Mg(OH)_2$•$CaCO_3$ + 30 T. $(NH_4)_2SO_4$<br>30 T. PE + 70 T. $Mg(OH)_2$•$CaCO_3$ (Vergleichsversuch) | 38,5<br>31,5 | 16,8<br>12,5 | 12,4<br>7,8 |

Beispiele 11-12

| Polymer: PE "Liten FB 29 Chemopetrol"<br>$CaCO_3$"PU 20 Keramische Werke, Poběžovice" | | | |
|---|---|---|---|
| 30 T. PE + 46 T. $CaCO_3$ + 24 T. $(NH_4)_2SO_4$<br>30 T. PE + 70 T. $CaCO_3$ (Vergleichsversuch) | 31,5<br>22,0 | 16,0<br>10,5 | 10,5<br>4,3 |

Beispiel 13

Die Brennbarkeit der Proben wurde durch Messung der Induktionsperiode des Entflammens an der Luft bewertet (Glasreaktor, Probe 100 mg)

| Zusammensetzung der Probe: | | |
|---|---|---|
| | 20 T. PE "Liten FB 20 Chemopetrol" | |
| | 40 T. $CaCO_3$ "PU 20 Keramische Werke, Poběžovice" | |
| | 40 T. $(NH_4)_2SO_4$ | |
| | Lufttemperatur ° C | Induktionsper. s |
| | 540<br>596 | entflammt nicht<br>60 |

Beispiel 14

Vergleichsversuch mit einer Probe eines "schwer entflammbaren Polypropylens", das die Anforderungen für Grad V-O nach UL 94 erfüllt.

| Zusammensetzung der Probe: | | |
|---|---|---|
| | 38 T. PP "Mosten 55 212 Chemopetrol" | |
| | 62 T. $Mg(OH)_2$ "Kisuma 5A" | |
| | Lufttemperatur | Induktionsper. |
| | 530° C | 81 s |

Beispiel 15

| Vergleichsversuch enthaltend: | | |
|---|---|---|
| 24 T. PE "Liten FB 29 Chemopetrol"<br>76 T. $CaCO_3$ "PU 20 Keramische Werke, Poběžovice" | Lufttemperatur | Induktionsper. |
| | 530° C | 48 s |

Beispiel 16

| | | |
|---|---|---|
| 15 T. PE "Liten FB 20 Chemopetrol"<br>42,5 T. $CaCO_3$ "PU 20 Keramische Werke, Poběžovice"<br>42,5 T. $(NH_4)_2SO_4$ | | |
| | Lufttemperatur °C | Induktionsper. s |
| | 523<br>590 | entflammt nicht<br>63. |

**Ansprüche**

1. Kompositmaterialien auf der Basis von Polyolefinen, die mit Hydroxiden und/oder Oxiden und/oder Karbonaten von Kalzium und/oder Magnesium gefüllt sind, sowie gegebenenfalls Pigmente, Stabilisatoren, Verarbeitungshilfsmittel und/oder weitere Polymere enthalten, dadurch gekennzeichnet, daß sie 15 bis 50 Gew.-% Polyolefine, 25 bis 75 Gew.-% der Kalzium- und/oder Magnesiumverbindungsfüllstoffe und 5 bis 45 Gew.-% Ammoniumsulfat enthalten, wobei die Mischfüllstoffe eine Teilchengröße von 1 bis 20 µm aufweisen.

2. Kompositmaterialien nach Anspruch 1, dadurch gekennzeichnet, daß sie als Mischfüllstoffe

| | | |
|---|---|---|
| **$CaCO_3$ + $(NH_4)_2SO_4$** | im Molverhältnis 1 : 1 | bis 2 : 1, |
| **$MgCO_3.CaCO_3$ + $(NH_4)_2SO_4$** | " 1 : 1 | bis 2 : 1, |
| **$Ca(OH)_2$ + $(NH_4)_2SO_4$** | " 1 : 1<br>oder | bis 2 : 1 |
| **$Mg(OH)_2.CaCO_3$ + $(NH_4)_2SO_4$** | " 1 : 1 | bis 2 : 1. |

enthalten.

3. Kompositmaterialien nach Anspruch 1 oder 2, dadurch gekennzeichnet, daß sie als Polymerbasisstoffe Polyolefine in Form von Homopolymeren der Gruppe Polypropylen und Polyethylen, deren Copolymeren oder Gemischen mit anderen Polymeren enthalten.